# EUROPEAN PATENT APPLICATION

(11) **EP 1 164 769 A1**
(43) Date of publication of application: **19.12.2001**
(21) Application number: 00440174.1
(22) Date of filing: 14.06.2000
(51) Int. Cl.: H04L 29/12, G06F 17/30, H04L 29/06

(54) **Telecommunication system, and network, and terminal, and generator, and method**

(71) Applicant: ALCATEL, 75008 Paris (FR)
(72) Inventor: Peters, Marco Johannes Hubertus, 4617 NS Bergen op Zoom (NL); Leroy, Suresh André Jean-Marie, 2100 Deume (BE)
(74) Representative: van Bommel, Jan Peter

(57) **Abstract**

Known telecommunication systems comprising an internet terminal (1,2,6,7) and a network for providing internet access/service offer a limited number of user-possibilities, which can be increased by introducing user-dependencies into the conversion of a (part of a) Uniform Resource Locator or URL into an IP address. This IP address defines the information to be supplied to said terminal (1,2,6,7), now user-dependently, for example location-dependently and/or time-dependently. Thereto, location information (Domain Name Server or DNS (32,42,52,93) with location dependent content, Point-of-Presence or PoP information, terminal's IP address, terminal's phone number, user-identification, Global Positioning System or GPS information, base station controller or BSC (90) information, area codes entered by said user) originating from said network or from said terminal (1,2,6,7) and/or timing information usually originating from said network are used.

## Description

The invention relates to a telecommunication system for receiving at least one control signal from a user via a terminal and comprising said terminal and a network for in response to said at least one control signal addressing a memory comprising information to be supplied to said terminal and stored at at least one memory location defined by at least one address signal.

Such a telecommunication system is known in general, with said terminal for example being a fixed analog or digital terminal comprising an analog or digital modem (such a combination for example being an analog or digital screenphone or a pc) or being a mobile (for example GSM or UMTS) or a cordless (for example DECT) terminal, with each one of said terminals nowadays usually being provided with a browser, and with said control signal for example being a (part of a) Uniform Resource Locator or URL (and/or with said control signal being converted into said (part of a) URL) to be entered by said user for example through text via a terminal's keyboard or through a mouse click via a terminal's mouse or through a touch via a terminal's touch screen or through voice/speech via a terminal's microphone. At least a part of said network corresponds with at least a part of an INTERNET and/or INTRANET, and comprises said memory (for example a server) in which said information is stored at said at least one memory location defined by said at least one address signal (which address signal for example corresponds with an IP address or for example is generated in response to said IP address), which information is to be supplied to said terminal in response to said control signal. Thereto, a Domain Name Server or DNS (usually located in said network) is used to convert said (part of a) URL into said IP address, which IP address is sent back to said (browser in said) terminal. In response to the receival of this IP address, said browser establishes for example a TCP (Transmission Control Protocol) or a UDP (User Datagram Protocol) connection with for example a (part of a) server as defined by said IP address for receiving said information.

Such a telecommunication system is disadvantageous, inter alia, due to being user-friendly insufficiently.

It is an object of the invention, inter alia, to provide a telecommunication system as described in the preamble, which is more user-friendly.

Thereto, the telecommunication system according to the invention is characterised in that said telecommunication system comprises a generator for generating at least one address signal in response to said at least one control signal in a user-dependent way.

By introducing said generator for generating in a user-dependent way, the telecommunication system has been individualised. As a consequence, a first user entering a specific control signal will receive first information stored in a first memory and read out from this first memory in response to a first address signal, and a second user entering the same specific control signal will receive second information (different from said first information) stored in said first or a second memory and read out from said first or second memory in response to a second address signal (different from said first address signal), due to for example a user identification (comprising for example the terminal's IP address and/or a number of a so-called source port) being involved in a conversion of said (part of a) URL into said IP address.

The invention is based on the insight, inter alia, that an individualised telecommunication system based upon at least one user-dependency is more user-friendly.

The invention solves the problem, inter alia, of providing a telecommunication system which is more user-friendly.

A first embodiment of the telecommunication system according to the invention is characterised in that said user-dependent way comprises at least one location-dependency and/or at least one time-dependency.

By introducing said location-dependency, a first user being in/near Brussels and entering a specific control signal (for example a mouse click on an icon for receiving the weather forecast) will receive first information (weather forecast for Brussels) stored in a first memory and read out from this first memory in response to a first address signal, and a second user being in/near Paris and entering the same specific control signal (for example a mouse click on the same icon for receiving the weather forecast) will receive second information (weather forecast for Paris) stored in said first or a second memory and read out from said first or second memory in response to a second address signal (different from said first address signal), due to for example said first user being in/near Brussels and said second user being in/near Paris.

Said time-dependency for example allows said first user after having entered a specific control signal (for example a mouse click on an icon for receiving the weather forecast) to receive first information from Monday till Friday (weather forecast for Brussels) stored in a first memory and read out from this first memory in response to a first address signal, and allows said first user after having entered the same specific control signal (for example a mouse click on the same icon for receiving the weather forecast) to receive second information during the weekend (weather forecast for Antwerp) stored in said first or a second memory and read out from said first or second memory in response to a second address signal (different from said first address signal), due to for example said first user working in Brussels and living in Antwerp.

A second embodiment of the telecommunication system according to the invention is characterised in that at least one part of said generator is located in said network.

By locating said generator (substantially) in the network, the terminal just needs minimal adaptions or does not even need to be adapted at all.

According to a first option, said generator corresponds with one or more Domain Name Servers or DNSs, with said location-dependencies being realised by storing in different DNSs different IP addresses but all to be read out in response to the same specific control signal. So, said first user being in/near Brussels and having entered said specific control signal (for example a mouse click on an icon for receiving the weather forecast) will get a first IP address from a DNS in/near Brussels and receive first information (weather forecast for Brussels) stored in a first memory and read out from this first memory in response to said first IP address, and a second user being in/near Paris and having entered the same specific control signal (for example a mouse click on the same icon for receiving the weather forecast) will get a second IP address from a DNS in/near Paris and receive second information (weather forecast for Paris) stored in said first or a second memory and read out from said first or second memory in response to said second IP address (different from said first IP address), due to for example said first user being in/near Brussels and said second user being in/near Paris. Said first option is very advantageous in that at least parts of said DNS and generator are integrated.

According to a second option, said generator is located in said network between terminal (for example near a Point-of-Presence or PoP) and DNS, and performs a kind of a conversion by converting at different locations said specific control signal into a location-dependent control signal which is different per location. Then, said specific control signal as entered by said first user (for example a mouse click on an icon for receiving the weather forecast) will be converted into a first location-dependent control signal in response to which a DNS in/near Brussels will generate said first IP address and said first user will receive first information (weather forecast for Brussels) stored in a first memory and read out from this first memory in response to said first IP address, and the same specific control signal as entered by said second user (for example a mouse click on the same icon for receiving the weather forecast) will be converted into a second location-dependent control signal (different from said first location-dependent control signal) in response to which a DNS in/near Paris will generate said second IP address and said second user will receive second information (weather forecast for Paris) stored in said first or a second memory and read out from said first or second memory in response to said second IP address (different from said first IP address), due to for example said first user being in/near Brussels and said second user being in/near Paris. Said second option is very advantageous in that the (content of a) DNS does not need to be adapted per location.

According to a third option, said generator corresponds with one or more DNSs, with said time-dependencies being realised by using clock signals for reading out from a DNS a first IP address in response to said specific control signal in case of a clock signal having a first value and for reading out from said DNS a second IP address in response to said specific control signal in case of said clock signal having a second value. So, said first user having entered said specific control signal (for example a mouse click on an icon for receiving the weather forecast) will get a first IP address from a DNS and receive first information (weather forecast for Brussels) stored in a first memory and read out from this first memory in response to said first IP address from Monday till Friday, and said first user having entered the same specific control signal (for example a mouse click on the same icon for receiving the weather forecast) will get a second IP address from a DNS and receive second information (weather forecast for Antwerp) stored in said first or a second memory and read out from said first or second memory in response to said second IP address (different from said first IP address) during the weekend, due to for example said first user working in Brussels and living in Antwerp. Said third option is very advantageous in that at least parts of said DNS and generator are integrated.

According to a fourth option, said generator is located in said network between terminal (for example near a Point-of-Presence or PoP) and DNS, and performs a kind of a conversion by converting said specific control signal into a time-dependent control signal. Then, said specific control signal as entered by said first user (for example a mouse click on an icon for receiving the weather forecast) will be converted into a first time-dependent control signal from Monday till Friday in response to which a DNS will generate said first IP address and said first user will receive first information (weather forecast for Brussels) stored in a first memory and read out from this first memory in response to said first IP address, and the same specific control signal as entered by said first user (for example a mouse click on the same icon for receiving the weather forecast) will be converted into a second time-dependent control signal (different from said first time-dependent control signal) during the weekend in response to which a DNS will generate said second IP address and said first user will receive second information (weather forecast for Antwerp) stored in said first or a second memory and read out from said first or second memory in response to said second IP address (different from said first IP address), due to for example said first user working in Brussels and living in Antwerp. Said fourth option is very advantageous in that the DNS does not need to be adapted.

A third embodiment of the system according to the invention is characterised in that said at least one part of said generator performs said generating in dependence of a location signal to be generated via said network.

By providing said generator with said location signal originating from said Point-of-Presence or PoP (the telephone number of this PoP) or originating via said PoP (the user's telephone number or a user identification or the user's IP address), said generators (said DNSs in case of said first option as well as said converters in case of said second option) can be designed more generally and do not need to be adapted per location, due to said location signals taking care of the individualisation.

A fourth embodiment of the system according the invention is characterised in that at least one part of said generator is located in said terminal.

By locating said generator (substantially) in the terminal, the network just needs minimal adaptions or does not even need to be adapted at all.

According to a first option, said generator performs a kind of a conversion by converting at different locations said specific control signal into a location-dependent control signal which is different per location. Thereto, said terminal for example receives location information from the network (in case of said terminal being a mobile terminal, base station controller or BSC information could be used, and in case of said terminal being a fixed or mobile terminal, PoP information could be used). Then, said specific control signal as entered by said first user (for example a mouse click on an icon for receiving the weather forecast) will be converted in said terminal into a first location-dependent control signal in response to which a DNS in/near Brussels will generate said first IP address and said first user will receive first information (weather forecast for Brussels) stored in a first memory and read out from this first memory in response to said first IP address, and the same specific control signal as entered by said second user (for example a mouse click on the same icon for receiving the weather forecast) will be converted in said terminal into a second location-dependent control signal (different from said first location-dependent control signal) in response to which a DNS in/near Paris will generate said second IP address and said second user will receive second information (weather forecast for Paris) stored in said first or a second memory and read out from said first or second memory in response to said second IP address (different from said first IP address), due to for example said first user being in/near Brussels and said second user being in/near Paris. Said first option is very advantageous in that the (content of a) DNS does not need to be adapted per location.

According to a second option, said generator performs a kind of a conversion by converting said specific control signal into a time-dependent control signal. Then, said specific control signal as entered by said first user (for example a mouse click on an icon for receiving the weather forecast) will be converted in said terminal into a first time-dependent control signal from Monday till Friday in response to which a DNS will generate said first IP address and said first user will receive first information (weather forecast for Brussels) stored in a first memory and read out from this first memory in response to said first IP address, and the same specific control signal as entered by said first user (for example a mouse click on the same icon for receiving the weather forecast) will be converted in said terminal into a second time-dependent control signal (different from said first time-dependent control signal) during the weekend in response to which a DNS will generate said second IP address and said first user will receive second information (weather forecast for Antwerp) stored in said first or a second memory and read out from said first or second memory in response to said second IP address (different from said first IP address), due to for example said first user working in Brussels and living in Antwerp. Said second option is very advantageous in that the DNS does not need to be adapted.

A fifth embodiment of the system according the invention is characterised in that said at least one part of said generator performs said generating in dependence of a further location signal to be generated via said terminal.

By providing said generator with said further location signal to be generated via said terminal, location-dependencies are introduced which are network-independently. For example, said further location signal originates from a Global Positioning System receiver or GPS receiver forming part of said terminal, or said further location signal is entered by said user, for example an area code. Then, in said terminal, in dependence of said further location signal, a specific control signal is converted into a location-dependent control signal, etc.

The invention further relates to a network for use in a telecommunication system for receiving at least one control signal from a user via terminal and comprising said terminal and said network for in response to said at least one control signal addressing a memory comprising information to be supplied to said terminal and stored at at least one memory location defined by at least one address signal.

The network according to the invention is characterised in that said network comprises a generator for generating at least one address signal in response to said at least one control signal in a user-dependent way.

Embodiments of the network according to the invention correspond with embodiments of the telecommunication system according to the invention as far as the network is involved.

The invention yet further relates to a terminal for use in a telecommunication system for receiving at least one control signal from a user via said terminal and comprising said terminal and a network for in response to said at least one control signal addressing a memory comprising information to be supplied to said terminal and stored at at least one memory location defined by at least one address signal.

The terminal according to the invention is characterised in that said terminal comprises a generator for generating at least one address signal in response to said at least one control signal in a user-dependent way.

Embodiments of the terminal according to the invention correspond with embodiments of the telecommunication system according to the invention as far as the terminal is involved.

The invention also relates to a generator for use in a telecommunication system for receiving at least one control signal from a user via a terminal and comprising said terminal and a network for in response to said at least one control signal addressing a memory comprising information to be supplied to said terminal and stored at at least one memory location defined by at least one address signal.

The generator according to the invention is characterised in that said telecommunication system comprises said generator for generating at least one address signal in response to said at least one control signal in a user-dependent way.

Embodiments of the generator according to the invention correspond with embodiments of the telecommunication system according to the invention as far as the generator is involved.

The invention yet also relates to a method for use in a telecommunication system for receiving at least one control signal from a user via a terminal and comprising said terminal and a network for in response to said at least one control signal addressing a memory comprising information to be supplied to said terminal and stored at at least one memory location defined by at least one address signal.

The method according to the invention is characterised in that said method comprises the step of generating at least one address signal in response to said at least one control signal in a user-dependent way.

Embodiments of the method according to the invention correspond with embodiments of the telecommunication system according to the invention as far as the method is involved.

US 6,055,542 discloses a system for displaying the content of a web page based on a user's interests, US 6,029,135 discloses a hypertext navigation system controlled by spoken words, US 5,764,639 as well as US 5,889,845 disclose a system for providing a remote user with a virtual presence to an office, US 6,052,725 discloses a non-local dynamic internet protocol addressing system, US 5,898,780 discloses an apparatus for authorizing remote internet access, and US 5,598,536 discloses an apparatus for providing remote users with the same unique IP address upon each network access. Neither one of these documents discloses the telecommunication system according to the invention. All references including further references cited with respect to and/or inside said references are considered to be incorporated in this patent application.

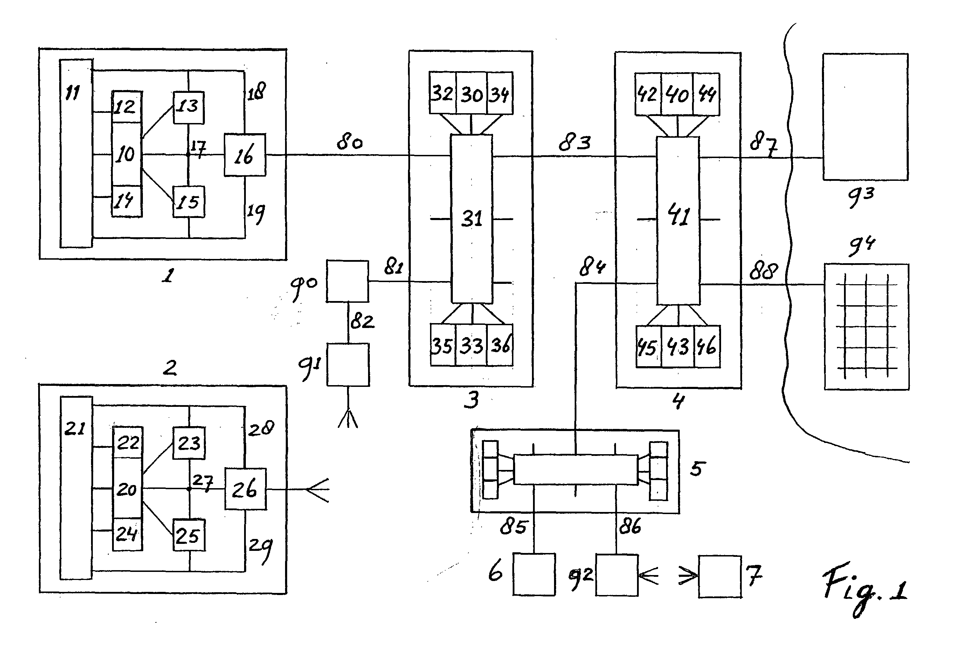

The invention will be further explained at the hand of an embodiment described with respect to a drawing, whereby
figure 1 discloses a telecommunication system according to the invention comprising a network according to the invention and a terminal according to the invention and a generator according to the invention.

The telecommunication system according to the invention as shown in figure 1 comprises a first, fixed terminal 1 according to the invention and a second, mobile (for example GSM or UMTS) terminal 2 according to the invention and a third, fixed terminal 6 according to the invention and a fourth, cordless (for example DECT) terminal 7 according to the invention and a network 3,4,5,90,91,92,93,94 according to the invention comprising a first switch 3, a second switch 4, a third switch 5, a Base Station Controller or BSC 90 (for example GSM or UMTS), a Base Station or BS 91 (for example GSM or UMTS), a Base Station or BS 92 (for example DECT), a generator 93 according to the invention and a memory 94.

Terminal 1 (or 6) comprises a processor system 10 coupled via a control connection to man-machine-interface or mmi 11 (like a keyboard - display-microphone - loudspeaker - mouse - touchscreen etc.) and coupled via a bus 17 to transceiver 16 (comprising a modem function). Via said bus 17 as well as via control connections, processor system 10 is further coupled to receiving unit 13 and to transmitting unit 15. Via a bus 18, transceiver 16 is coupled to receiving unit 13 and to mmi 11. Via a bus 19, transceiver 16 is coupled to transmitting unit 15 and to mmi 11. Processor system 10 is coupled to (and/or even comprises) a generator 12 and a memory 14, which both are coupled to mmi 11 via control connections.

Terminal 2 (or 7) comprises a processor system 20 coupled via a control connection to man-machine-interface or mmi 21 (like a keyboard - display-microphone - loudspeaker - mouse - touchscreen etc.) and coupled via a bus 27 to transceiver 26 (comprising a modem function). Via said bus 27 as well as via control connections, processor system 20 is further coupled to receiving unit 23 and to transmitting unit 25. Via a bus 28, transceiver 26 is coupled to receiving unit 23 and to mmi 21. Via a bus 29, transceiver 26 is coupled to transmitting unit 25 and to mmi 21. Processor system 20 is coupled to (and/or even comprises) a generator 22 and a memory 24, which both are coupled to mmi 21 via control connections. Transceiver 26 is connected to an antennae.

Switch 3 (or 5) comprises a processor system 30 coupled via a control connection to a coupling unit 31. Processor system 30 is coupled to (and/or even comprises) a generator 32 and a memory 34, which both are coupled to coupling unit 31 via control connections. Coupling unit 31 is further coupled to via control connections to a receiving unit 35 and a transmitting unit 36 and a processing unit 33.

Switch 4 (or 5) comprises a processor system 40 coupled via a control connection to a coupling unit 41. Processor system 40 is coupled to (and/or even comprises) a generator 42 and a memory 44, which both are coupled to coupling unit 41 via control connections. Coupling unit 41 is further coupled to via control connections to a receiving unit 45 and a transmitting unit 46 and a processing unit 43.

Transceiver 16 of terminal 1 is coupled via a connection 80 to coupling unit 31 of switch 3, which coupling unit 31 is further coupled via a connection 83 to coupling unit 41 of switch 4 and via a connection 81 to BSC 90, which is coupled via a connection 82 to BS 91 for mobile communication with terminal 2. Coupling unit 41 of switch 4 is further coupled via a connection 87 to generator 93 and via a connection 88 to memory 94 and via a connection 84 to switch 5, which via a connection 85 is coupled to terminal 6 and via a connection 86 is coupled to BS 92 for cordless communication with terminal 7.

The telecommunication system according to the invention as shown in figure 1 functions as follows.

According to a first embodiment, a user using terminal 2 and being in/near Brussels (so BS 91 being located in/near Brussels) has been connected to the INTERNET or an INTRANET via his terminal 2 and BS 91 and connection 82 and BSC 90 and connection 81 and coupling unit 31 of switch 3 and connection 83 and coupling unit 41 of switch 4 and connection 88, with memory 94 being for example a server comprising web-sites like for example www.alcatel.com and/or aww.alcatel.com, which web-sites are stored at the respective IP addresses or at other addresses related to these respective IP addresses. Then said user wants to check for example the weather forecast for Brussels. Thereto, he enters a specific control signal (for example a mouse click on a weather-forecast-icon via mmi 21 for receiving the local weather forecast) which results in his browser (running in processor system 20) sending a Uniform Resource Locator or URL via transmitting unit 25 and/or transceiver 26 to switch 3 via BS 91 and connection 82 and BSC 90 and connection 81. In switch 3, said URL is sent via coupling unit 31 to generator 32 (being for example a Domain Name Server or DNS located in/near Brussels) under control of processor system 30. Generator 32 converts said URL into a first IP address, which via coupling unit 31 under control of processor system 30 is sent back to terminal 2 via connection 81 and BSC 90 and connection 82 and BS 91. In terminal 2, said first IP address is received via transceiver 26 and/or receiving unit 23 and supplied to said browser, which in response connects memory 94 for receiving first information (weather forecast for Brussels) stored at said first IP address or at an other address being related to said first IP address.

The next day, said user travels to Paris to visit his mother company, and during his visit he gets terminal 7 (so BS 92 being located in/near Paris). At a moment, said user has been connected to the INTERNET or an INTRANET via his terminal 7 and BS 92 and connection 86 and coupling unit 51 of switch 5 and connection 84 and coupling unit 41 of switch 4 and connection 88, with memory 94 being for example a server comprising web-sites like for example www.alcatel.com and/or aww.alcatel.com, which web-sites are stored at the respective IP addresses or at other addresses related to these respective IP addresses. Then said user wants to check for example the weather forecast for Paris. Thereto, he enters the same specific control signal (for example a mouse click on the same weather-forecast-icon via mmi 71 for receiving the local weather forecast) which results in his browser (running in processor system 70) sending the same Uniform Resource Locator or URL via transmitting unit 75 and/or transceiver 76 to switch 5 via BS 92 and connection 86. In switch 5, said same URL is sent via coupling unit 51 to generator 52 (being for example a Domain Name Server or DNS located in/near Paris) under control of processor system 50. Generator 52 converts said same URL into a second IP address (different from said first IP address), which via coupling unit 51 under control of processor system 50 is sent back to terminal 7 via connection 86 and BS 92. In terminal 7, said second IP address is received via transceiver 76 and/or receiving unit 73 and supplied to said browser, which in response connects memory 94 for receiving second information (weather forecast for Paris) stored at said second IP address or at an other address being related to said second IP address. So, said user, although generating the same URL at different locations, gets different information per location, due to said same URL being converted into different IP addresses in a location-dependent way.

Of course, instead of one memory 94, several memories at different locations could be used.

According to a first alternative to said first embodiment, BS 92 is capable of communicating with terminal 2, for example either due to BS 92 being a DECT base station and terminal 2 being designed to also communicate according to DECT or due to terminal 2 being a GSM and/or UMTS terminal and BS 92 being designed to (also) communicate according to GSM and/or UMTS, in which case said user may carry his terminal 2 with him from Brussels to Paris, etc.

According to a second alternative to said first embodiment, said first user uses terminal 2, and a second user uses terminal 7, etc.

According to a second embodiment, generator 93 is a Domain Name Server or DNS, and generators 32 and 52 respectively just convert the same URL into a first converted URL and a second converted URL respectively. A user using terminal 2 and being in/near Brussels (so BS 91 being located in/near Brussels) has been connected to the INTERNET or an INTRANET via his terminal 2 and BS 91 and connection 82 and BSC 90 and connection 81 and coupling unit 31 of switch 3 and connection 83 and coupling unit 41 of switch 4 and connection 88, with memory 94 being for example a server comprising web-sites like for example www.alcatel.com and/or aww.alcatel.com, which web-sites are stored at the respective IP addresses or at other addresses related to these respective IP addresses. Then said user wants to check for example the weather forecast for Brussels. Thereto, he enters a specific control signal (for example a mouse click on a weather-forecast-icon via mmi 21 for receiving the local weather forecast) which results in his browser (running in processor system 20) sending a Uniform Resource Locator or URL via transmitting unit 25 and/or transceiver 26 to switch 3 via BS 91 and connection 82 and BSC 90 and connection 81. In switch 3, said URL is sent via coupling unit 31 to generator 32 under control of processor system 30. Generator 32 converts said URL into a first converted URL, which via coupling unit 31 and connection 83 and coupling unit 41 of switch 4 and connection 87 is sent to DNS 93. DNS 93 converts said first converted URL into a first IP address, which is sent back to terminal 2. In terminal 2, said first IP address is received via transceiver 26 and/or receiving unit 23 and supplied to said browser, which in response connects memory 94 for receiving first information (weather forecast for Brussels) stored at said first IP address or at an other address being related to said first IP address.

The next day, said user travels to Paris to visit his mother company, and during his visit he gets terminal 7 (so BS 92 being located in/near Paris). At a moment, said user has been connected to the INTERNET or an INTRANET via his terminal 7 and BS 92 and connection 86 and coupling unit 51 of switch 5 and connection 84 and coupling unit 41 of switch 4 and connection 88, with memory 94 being for example a server comprising web-sites like for example www.alcatel.com and/or aww.alcatel.com, which web-sites are stored at the respective IP addresses or at other addresses related to these respective IP addresses. Then said user wants to check for example the weather forecast for Paris. Thereto, he enters the same specific control signal (for example a mouse click on the same weather-forecast-icon via mmi 71 for receiving the local weather forecast) which results in his browser (running in processor system 70) sending the same Uniform Resource Locator or URL via transmitting unit 75 and/or transceiver 76 to switch 5 via BS 92 and connection 86. In switch 5, said same URL is sent via coupling unit 51 to generator 52 under control of processor system 50. Generator 52 converts said URL into a second converted URL, which via coupling unit 51 and connection 84 and coupling unit 41 of switch 4 and connection 87 is sent to DNS 93. DNS 93 converts said second converted URL into a second IP address (different from said first IP address), which is sent back to terminal 7. In terminal 7, said second IP address is received via transceiver 76 and/or receiving unit 73 and supplied to said browser, which in response connects memory 94 for receiving second information (weather forecast for Paris) stored at said second IP address or at an other address being related to said second IP address. So, said user, although generating the same URL at different locations, gets different information per location, due to said same URL being converted into different URLs in a location-dependent way, which result in different IP addresses, etc.

Of course, instead of one DNS 93, several DNSs at different locations could be used. And instead of one memory 94, several memories at different locations could be used.

According to a first alternative to said second embodiment, BS 92 is capable of communicating with terminal 2, for example either due to BS 92 being a DECT base station and terminal 2 being designed to also communicate according to DECT or due to terminal 2 being a GSM and/or UMTS terminal and BS 92 being designed to (also) communicate according to GSM and/or UMTS, in which case said user may carry his terminal 2 with him from Brussels to Paris, etc.

According to a second alternative to said second embodiment, said first user uses terminal 2, and a second user uses terminal 7, etc.

According to a third embodiment, a user using terminal 2 and being in/near Brussels (so BS 91 being located in/near Brussels) has been connected to the INTERNET or an INTRANET via his terminal 2 and BS 91 and connection 82 and BSC 90 and connection 81 and coupling unit 31 of switch 3 and connection 83 and coupling unit 41 of switch 4 and connection 88, with memory 94 being for example a server comprising web-sites like for example www.alcatel.com and/or aww.alcatel.com, which web-sites are stored at the respective IP addresses or at other addresses related to these respective IP addresses. Then said user wants to check for example the weather forecast for Brussels. Thereto, he enters a specific control signal (for example a mouse click on a weather-forecast-icon via mmi 21 for receiving the local weather forecast) which results in his browser (running in processor system 20) sending a Uniform Resource Locator or URL via transmitting unit 25 and/or transceiver 26 to switch 4 via BS 91 and connection 82 and BSC 90 and connection 81 and coupling unit 31 of switch 3 and connection 83. In switch 4, said URL is sent via coupling unit 41 to generator 42 (being for example a Domain Name Server or DNS) under control of processor system 40. Generator 42 converts said URL into a first IP address (thereby using the fact that said URL has arrived via connection 83 and switch 3 in/near Brussels), which via coupling unit 41 under control of processor system 40 is sent back to terminal 2. In terminal 2, said first IP address is received via transceiver 26 and/or receiving unit 23 and supplied to said browser, which in response connects memory 94 for receiving first information (weather forecast for Brussels) stored at said first IP address or at an other address being related to said first IP address.

The next day, said user travels to Paris to visit his mother company, and during his visit he gets terminal 7 (so BS 92 being located in/near Paris). At a moment, said user has been connected to the INTERNET or an INTRANET via his terminal 7 and BS 92 and connection 86 and coupling unit 51 of switch 5 and connection 84 and coupling unit 41 of switch 4 and connection 88, with memory 94 being for example a server comprising web-sites like for example www.alcatel.com and/or aww.alcatel.com, which web-sites are stored at the respective IP addresses or at other addresses related to these respective IP addresses. Then said user wants to check for example the weather forecast for Paris. Thereto, he enters the same specific control signal (for example a mouse click on the same weather-forecast-icon via mmi 71 for receiving the local weather forecast) which results in his browser (running in processor system 70) sending the same Uniform Resource Locator or URL via transmitting unit 75 and/or transceiver 76 to switch 4 via BS 92 and connection 86 and coupling unit 51 of switch 5 and connection 84. In switch 4, said same URL is sent via coupling unit 41 to generator 42 (being for example a Domain Name Server or DNS) under control of processor system 40. Generator 42 converts said same URL into a second IP address (different from said first IP address, thereby using the fact that said URL has arrived via connection 84 and switch 5 in/near Paris), which via coupling unit 41 under control of processor system 40 is sent back to terminal 7. In terminal 7, said second IP address is received via transceiver 76 and/or receiving unit 73 and supplied to said browser, which in response connects memory 94 for receiving second information (weather forecast for Paris) stored at said second IP address or at an other address being related to said second IP address. So, said user, although generating the same URL at different locations, gets different information per location, due to said same URL being converted into different IP addresses in a location-dependent way, thereby using location signals generated via said network.

Of course, instead of one memory 94, several memories at different locations could be used.

According to a first alternative to said third embodiment, other location signals generated via said network are used, for example in case of terminal 2 being involved, location signals indicating that said URL has arrived via BS 91 and/or connection 82 and/or BSC 90 and/or connection 81 are supplied via connection 83 and coupling unit 41 to generator 42, and in case of terminal 7 being involved, location signals indicating that said URL has arrived via BS 92 and/or connection 86 are supplied via connection 84 and coupling unit 41 to generator 42. Or yet other location signals generated via said network are used, for example a telephone number of terminal 2 and/or 7, and/or an IP address of terminal 2 and/or 7, and/or a user identification number, in which cases said user for example should have informed said network before at which location he will be. This could be done for example via said INTERNET and/or INTRANET, or via special telephone calls, or by sending emails etc., with such information being stored in memory 44, for example.

According to a second alternative to said third embodiment, further location signals generated via said terminal are used, for example in case of terminal 2 being involved, said terminal 2 could be provided with a Global Positioning System receiver or GPS receiver, whereby GPS information is supplied to switch 4 and for example stored in memory 44, each time a URL is generated or just once after the start of an INTERNET and/or INTRANET session, or said user enters an area code via mmi 21, which is supplied to switch 4 and for example stored in memory 44, each time a URL is generated or just once after the start of an INTERNET and/or INTRANET session, and in case of terminal 7 being involved, said user could enter an area code via mmi 21, which is supplied to switch 4 and for example stored in memory 44, each time a URL is generated or just once after the start of an INTERNET and/or INTRANET session, or via special telephone calls, or by sending emails etc.

According to a third alternative to said third embodiment, BS 92 is capable of communicating with terminal 2, for example either due to BS 92 being a DECT base station and terminal 2 being designed to also communicate according to DECT or due to terminal 2 being a GSM and/or UMTS terminal and BS 92 being designed to (also) communicate according to GSM and/or UMTS, in which case said user may carry his terminal 2 with him from Brussels to Paris, etc.

According to a fourth alternative to said third embodiment, said first user uses terminal 2, and a second user uses terminal 7, etc.

According to a fourth embodiment, for example generator 93 is a Domain Name Server or DNS, and generators 22 and 72 respectively just convert the same URL into a first converted URL and a second converted URL respectively. A user using terminal 2 and being in/near Brussels (so BS 91 being located in/near Brussels) has been connected to the INTERNET or an INTRANET via his terminal 2 and BS 91 and connection 82 and BSC 90 and connection 81 and coupling unit 31 of switch 3 and connection 83 and coupling unit 41 of switch 4 and connection 88, with memory 94 being for example a server comprising web-sites like for example www.alcatel.com and/or aww.alcatel.com, which web-sites are stored at the respective IP addresses or at other addresses related to these respective IP addresses. Then said user wants to check for example the weather forecast for Brussels. Thereto, he enters a specific control signal (for example a mouse click on a weather-forecast-icon via mmi 21 for receiving the local weather forecast) which results in his browser (running in processor system 20) generating a Uniform Resource Locator or URL, which is supplied to generator 22 for converting said URL into a first converted URL (thereby in general generator 22 will use said location signals and/or said other location signals and/or said yet other location signals and/or said further location signals as described before, which for example are exchanged each time a URL is generated or just once after the start of an INTERNET and/or INTRANET session, or via special telephone calls, or by sending emails etc. and/or which for example could be stored in memory 24). Via transmitting unit 25 and/or transceiver 26, said first converted URL is sent to DNS 93. DNS 93 converts said first converted URL into a first IP address, which is sent back to terminal 2. In terminal 2, said first IP address is received via transceiver 26 and/or receiving unit 23 and supplied to said browser, which in response connects memory 94 for receiving first information (weather forecast for Brussels) stored at said first IP address or at an other address being related to said first IP address.

The next day, said user travels to Paris to visit his mother company, and during his visit he gets terminal 7 (so BS 92 being located in/near Paris). At a moment, said user has been connected to the INTERNET or an INTRANET via his terminal 7 and BS 92 and connection 86 and coupling unit 51 of switch 5 and connection 84 and coupling unit 41 of switch 4 and connection 88, with memory 94 being for example a server comprising web-sites like for example www.alcatel.com and/or aww.alcatel.com, which web-sites are stored at the respective IP addresses or at other addresses related to these respective IP addresses. Then said user wants to check for example the weather forecast for Paris. Thereto, he enters the same specific control signal (for example a mouse click on the same weather-forecast-icon via mmi 71 for receiving the local weather forecast) which results in his browser (running in processor system 70) generating the same Uniform Resource Locator or URL, which is supplied to generator 72 for converting said URL into a second converted URL (thereby in general generator 72 will use said location signals and/or said other location signals and/or said yet other location signals and/or said further location signals as described before, which for example are exchanged each time a URL is generated or just once after the start of an INTERNET and/or INTRANET session, or via special telephone calls, or by sending emails etc. and/or which for example could be stored in memory 74). Via transmitting unit 75 and/or transceiver 76, said second converted URL is sent to DNS 93. DNS 93 converts said second converted URL into a second IP address (different from said first IP address), which is sent back to terminal 7. In terminal 7, said second IP address is received via transceiver 76 and/or receiving unit 73 and supplied to said browser, which in response connects memory 94 for receiving second information (weather forecast for Paris) stored at said second IP address or at an other address being related to said second IP address. So, said user, although generating the same URL at different locations, gets different information per location, due to said same URL being converted into different URLs in a location-dependent way, which result in different IP addresses, etc.

Of course, instead of one DNS 93, several DNSs at different locations could be used. And instead of one memory 94, several memories at different locations could be used.

According to a first alternative to said fourth embodiment, BS 92 is capable of communicating with terminal 2, for example either due to BS 92 being a DECT base station and terminal 2 being designed to also communicate according to DECT or due to terminal 2 being a GSM and/or UMTS terminal and BS 92 being designed to (also) communicate according to GSM and/or UMTS, in which case said user may carry his terminal 2 with him from Brussels to Paris, etc.

According to a second alternative to said fourth embodiment, said first user uses terminal 2, and a second user uses terminal 7, etc.

According to a fifth embodiment, a user using terminal 1 and being in/near Brussels has been connected to the INTERNET or an INTRANET via his terminal 1 and connection 80 and coupling unit 31 of switch 3 and connection 83 and coupling unit 41 of switch 4 and connection 88, with memory 94 being for example a server comprising web-sites like for example www.alcatel.com and/or aww.alcatel.com, which web-sites are stored at the respective IP addresses or at other addresses related to these respective IP addresses. Then said user wants to check for example the weather forecast for Brussels. Thereto, he enters a specific control signal (for example a mouse click on a weather-forecast-icon via mmi 11 for receiving the local weather forecast) which results in his browser (running in processor system 10) sending a Uniform Resource Locator or URL via transmitting unit 15 and/or transceiver 16 to switch 3 via connection 80. In switch 3, said URL is sent via coupling unit 31 to generator 32 (being for example a Domain Name Server or DNS located in/near Brussels) under control of processor system 30. Generator 32 converts said URL into a first IP address, which via coupling unit 31 under control of processor system 30 is sent back to terminal 1 via connection 80. In terminal 1, said first IP address is received via transceiver 16 and/or receiving unit 13 and supplied to said browser, which in response connects memory 94 for receiving first information (weather forecast for Brussels) stored at said first IP address or at an other address being related to said first IP address.

The next day, said user travels to Paris to visit his mother company, and during his visit he gets terminal 6. At a moment, said user has been connected to the INTERNET or an INTRANET via his terminal 6 and connection 85 and coupling unit 51 of switch 5 and connection 84 and coupling unit 41 of switch 4 and connection 88, with memory 94 being for example a server comprising web-sites like for example www.alcatel.com and/or aww.alcatel.com, which web-sites are stored at the respective IP addresses or at other addresses related to these respective IP addresses. Then said user wants to check for example the weather forecast for Paris. Thereto, he enters the same specific control signal (for example a mouse click on the same weather-forecast-icon via mmi 61 for receiving the local weather forecast) which results in his browser (running in processor system 60) sending the same Uniform Resource Locator or URL via transmitting unit 65 and/or transceiver 66 to switch 5 via connection 85. In switch 5, said same URL is sent via coupling unit 51 to generator 52 (being for example a Domain Name Server or DNS located in/near Paris) under control of processor system 50. Generator 52 converts said same URL into a second IP address (different from said first IP address), which via coupling unit 51 under control of processor system 50 is sent back to terminal 6 via connection 85. In terminal 6, said second IP address is received via transceiver 66 and/or receiving unit 63 and supplied to said browser, which in response connects memory 94 for receiving second information (weather forecast for Paris) stored at said second IP address or at an other address being related to said second IP address. So, said user, although generating the same URL at different locations, gets different information per location, due to said same URL being converted into different IP addresses in a location-dependent way.

Of course, instead of one memory 94, several memories at different locations could be used.

According to a first alternative to said fifth embodiment, generator 93 is a Domain Name Server or DNS, and generators 32 and 52 respectively just convert the same URL into a first converted URL and a second converted URL respectively, etc. Or generators 12 and 62 are used for said converting, with generator 93 being a DNS and/or with generators 32 and 42 and 52 being DNSs, etc.

According to a second alternative to said fifth embodiment, location signals generated via said network are used, for example said location signals and/or said other location signals indicating that said URL has arrived via connection 80 or 81 or via connection 85 or 86 or via connection 83 or 84 etc., and/or said yet other location signals generated via said network are used, for example a telephone number of terminal 1 and/or 6, and/or an IP address of terminal 1 and/or 6, and/or a user identification number (for example to be entered via mmi 11 or 61 in the form of a code and/or password or by using a smart card + card reader or by using speech or a finger print, etc.), in which cases said user for example should have informed said network before at which location he will be. This could be done for example via said INTERNET and/or INTRANET, or via special telephone calls, or by sending emails etc., with such information being stored in memory 34 and/or 44 and/or 54 for example.

According to a third alternative to said fifth embodiment, further location signals generated via said terminal are used, for example said user could enter an area code via mmi 11 or 61, which is supplied to switch 4 and for example stored in memory 44, each time a URL is generated or just once after the start of an INTERNET and/or INTRANET session, or via special telephone calls, or by sending emails etc.

According to a sixth embodiment, for example in addition to the location-dependencies decribed before, or completely separated from these location-dependencies described before, time-dependencies are introduced. Generator 93 corresponds with a DNS, with said time-dependencies being realised by using clock signals for reading out from said DNS a first IP address in response to said URL in case of a clock signal having a first value and for reading out from said DNS a second IP address in response to said URL in case of said clock signal having a second value. So, said user having entered said URL sometime from Monday till Friday (for example a mouse click on an icon for receiving the weather forecast) will get said first IP address from said DNS and receive first information (weather forecast for Brussels) stored in said memory and read out from this memory in response to said first IP address, and said user having entered the same URL during the weekend (for example a mouse click on the same icon for receiving the weather forecast) will get said second IP address from said DNS and receive second information (weather forecast for Antwerp) stored in said memory and read out from said memory in response to said second IP address (different from said first IP address), due to for example said user working in Brussels and living in Antwerp.

According to a first alternative to said sixth embodiment, generator 93 is a DNS, and generators 32 and 52 respectively just convert the same URL into a first converted URL and a second converted URL respectively, with said DNS reading out a first IP address in response to said first converted URL and reading out a second IP address in response to said second converted URL etc. Said time-dependencies could again be realised by using clock signals for reading out from said generators a first converted URL in response to said URL in case of a clock signal having a first value and for reading out from said generators a second converted URL in response to said URL in case of said clock signal having a second value. Or generators 12 and 62 are used for said converting, with generator 93 being a DNS and/or with generators 32 and 42 and 52 being DNSs, etc.

According to a second alternative to said sixth embodiment, location signals generated via said network are used, for example said location signals and/or said other location signals indicating that said URL has arrived via connection 80 or 81 or via connection 85 or 86 or via connection 83 or 84 etc., and/or said yet other location signals generated via said network are used, for example a telephone number of a terminal, and/or an IP address of a terminal, and/or a user identification number (for example to be entered via an mmi in the form of a code and/or password or by using a smart card + card reader or by using speech or a finger print, etc.), whereby said user for example could have informed said network before at which location he will be and/or what he would like to get/do etc.. This could be done for example via said INTERNET and/or INTRANET, or via special telephone calls, or by sending emails etc., with such information being stored in memory 34 and/or 44 and/or 54 for example.

According to a third alternative to said sixth embodiment, further location signals generated via said terminal are used, for example said user could enter an area code via an mmi, which is supplied to a switch and for example stored in a memory in said switch, each time a URL is generated or just once after the start of an INTERNET and/or INTRANET session, or via special telephone calls, or by sending emails etc.

It should be noted that said location-dependency and said time-dependency are both just examples of user-dependencies, whereby the term "user-dependencies" is to be regarded to comprise any dependency related to a user, which is not limited to direct dependencies, but does also include indirect dependencies (like a first generator at a first location generating differently from a second generator at a second location), and may include user groups and user behaviour. Such dependencies can be adjusted by a user, and/or (pre)programmed, and/or dynamically adapted by the system in response to experiences from the past.

The example of the weather forecast is just an example of a kind of information and does not exclude other kinds of information, like for example flight/train schedules, traffic jam overview, yellow pages, etc.. In general any kind of information in which a user is interested could be supplied to said user, whereby the invention defines, inter alia, how said user's behaviour adapts the part of said (kind of) information to be supplied to him.

All embodiments are just embodiments and do not exclude other embodiments not shown and/or described. All alternatives are just alternatives and do not exclude other alternatives not shown and/or described. Each (part of an) embodiment and/or each (part of an) alternative can be combined with any other (part of an) embodiment and/or any other (part of an) alternative. Terms like "in response to A" and "in dependence of B" do not exclude that there could be a further "in response to C" and a further "in dependence of D" etc.

Each generator will generally comprise a memory (like for example a server) which is addressed in response to user-dependencies, whereby said user-dependent addressing could take place inside said generator as well as outside said generator. Thereto an addressor could be used, which (like a hardware converter) converts an incoming address signal into an outgoing address signal for said memory, possibly in dependence of certain signals like location signals etc. and/or clock signals etc. If not forming part of said generator, said addressor could for part of for example a switch. Such a generator could correspond with a DNS (or include a DNS or form part of a DNS).

Each generator may alternatively be realised by a hardware converter, which converts an incoming address signal into an outgoing address signal for said DNS, possibly in dependence of certain signals like location signals etc. and/or clock signals etc. And/or said generator may be realised by a software converter, which converts an incoming address signal into an outgoing address signal for said DNS, possibly in dependence of certain signals like location signals etc. and/or clock signals etc. Therefore, said generator could be a computer program product for generating at least one address information-unit in response to at least one control information-unit in a user-dependent way (and for example running in one of said processor systems), and/or could (at least partly) be integrated with a browser, etc.

For each one of said terminals and/or said switches, alternative hardware structures are available, like an integration of two or more separated parts into one new part, or the dividing of one part into at least two separated parts, or the placing of three or more parallel parts serially, or the placing of three or more serial parts parallelly, etc.

## Claims

1. Telecommunication system for receiving at least one control signal from a user via a terminal and comprising said terminal and a network for in response to said at least one control signal addressing a memory comprising information to be supplied to said terminal and stored at at least one memory location defined by at least one address signal, **characterised in that** said telecommunication system comprises a generator for generating at least one address signal in response to said at least one control signal in a user-dependent way.

2. Telecommunication system according to claim 1, **characterised in that** said user-dependent way comprises at least one location-dependency and/or at least one time-dependency.

3. Telecommunication system according to claim 1 or 2, **characterised in that** at least one part of said generator is located in said network.

4. Telecommunication system according to claim 3, **characterised in that** said at least one part of said generator performs said generating in dependence of a location signal to be generated via said network.

5. Telecommunication system according to claim 1 or 2, **characterised in that** at least one part of said generator is located in said terminal.

6. Telecommunication system according to claim 3, 4 or 5, **characterised in that** said at least one part of said generator performs said generating in dependence of a further location signal to be generated via said terminal.

7. Network for use in a telecommunication system for receiving at least one control signal from a user via a terminal and comprising said terminal and said network for in response to said at least one control signal addressing a memory comprising information to be supplied to said terminal and stored at at least one memory location defined by at least one address signal, **characterised in that** said network comprises a generator for generating at least one address signal in response to said at least one control signal in a user-dependent way.

8. Terminal for use in a telecommunication system for receiving at least one control signal from a user via said terminal and comprising said terminal and a network for in response to said at least one control signal addressing a memory comprising information to be supplied to said terminal and stored at at least one memory location defined by at least one address signal, **characterised in that** said terminal comprises a generator for generating at least one address signal in response to said at least one control signal in a user-dependent way.

9. Generator for use in a telecommunication system for receiving at least one control signal from a user via a terminal and comprising said terminal and a network for in response to said at least one control signal addressing a memory comprising information to be supplied to said terminal and stored at at least one memory location defined by at least one address signal, **characterised in that** said telecommunication system comprises said generator for generating at least one address signal in response to said at least one control signal in a user-dependent way.

10. Method for use in a telecommunication system for receiving at least one control signal from a user via a terminal and comprising said terminal and a network for in response to said at least one control signal addressing a memory comprising information to be supplied to said terminal and stored at at least one memory location defined by at least one address signal, **characterised in that** said method comprises the step of generating at least one address signal in response to said at least one control signal in a user-dependent way.
